# EUROPÄISCHE PATENTANMELDUNG

(11) **EP 1 498 349 A1**
(43) Veröffentlichungstag der Anmeldung: **19.01.2005**
(21) Anmeldenummer: 04015016.1
(22) Anmeldetag: 25.06.2004
(51) Int. Cl.: B64F 1/36, B65G 1/04, B65G 47/50

(54) **Verfahren und Vorrichtung zur Frühgepäckspeicherung**

(30) Priorität: 17.07.2003 DE 10332359
(71) Anmelder: ABB PATENT GmbH, 68526 Ladenburg (DE)
(72) Erfinder: Koini, Martin, 57636 Soerth (DE); Baier, Gunar, Dr., 68197 Mannheim (DE); Nagel, Günther, Dr., 76676 Graben-Neudorf (DE)
(74) Vertreter: Miller, Toivo

(57) **Zusammenfassung**

Die Erfindung betrifft ein Verfahren und eine Vorrichtung (10) zur Verwahrung von frühzeitig angeliefertem Gepäck, sogenanntes Frühgepäck, in Verkehrseinrichtungen, insbesondere Verkehrsflughäfen, welches Gepäck in zeitlichem Abstand von zum Beispiel > 2h vor der Startzeit des jeweiligen Verkehrsmittels an einem Aufgabeort angelieferte Gepäck bis zum Zeitpunkt der Verladung in das betreffende Verkehrsmittel in Verwahrung genommen wird, wobei das Gepäck in ein Fördersystem eingebracht und darin derart verwahrt wird, dass es jederzeit aus der Verwahrung entnommen werden kann und über eine Entnahmestation der Verladung zugeführt wird, wobei das Frühgepäck vom Aufgabeort über eine Förderstrecke des Fördersystems zu einem besonderen Zwischenlagerort (18) gefördert und dort jeweils einzeln mechanisch gehandhabt (22) und raumsparend auf zugewiesenen Zwischenlagerplätzen gestapelt wird, der betreffende Zwischenlagerort für das jeweilige Gepäck EDV-mäßig erfasst wird, und bei Erreichen eines vorgebbaren Zeitpunktes die an dem Zwischenlagerort verwahrten Gepäckstücke mechanisch auf dem Lagerort entnommen und über die Förderstrecke dem normalen Verladeprozess zugeführt werden.

## Beschreibung

Die Erfindung betrifft ein Verfahren sowie eine Vorrichtung zur Verwahrung von frühzeitig angeliefertem Gepäck, sogenanntem Frühgepäck, in Verkehrseinrichtung, insbesondere in Verkehrsflughäfen, welches Gepäck in großem zeitlichem Abstand von zum Beispiel > 2h vor der Startzeit des jeweiligen Verkehrsmittels an einem Aufgabeort angeliefert wird, wobei dieses Frühgepäck bis zum Zeitpunkt der Verladung in das betreffende Verkehrsmittel in Verwahrung genommen wird, indem das Gepäck in ein Fördersystem eingebracht und darin derart verwahrt wird, dass es jederzeit aus der Verwahrung entnommen werden kann und über eine Entnahmestation der üblichen Verladung in dem betreffenden Verkehrsmittel, insbesondere Flugzeug, zugeführt wird.

Insbesondere bezieht sich die Erfindung im wesentlichen auf die Automatisierung des Gepäckhandhabungsprozesses in Verkehrsflughäfen für Flugreisende mit Fluggepäck und hierbei auf die Handhabung von "frühzeitig" in das Gepäckhandhabungssystem eingebrachte Gepäckstücken. Als "frühzeitig eingebrachtes Gepäck" oder "Frühgepäck" werden solche Gepäckstücke bezeichnet, bei denen im Zeitpunkt der Gepäckeinlieferung der Sortier-, Verlade- und Transportprozess für das betreffende Verkehrsmittel, insbesondere Flugzeug, noch nicht begonnen werden kann, weshalb die Gepäckstücke innerhalb des Gepäckverladesystems noch über einen gewissen Zeitraum zwischengelagert werden müssen.

In heutigen Gepäckhandhabungsprozessen an Verkehrsflughäfen beginnt die flugbezogene Sortierung und Verladung der Gepäckstücke üblicherweise etwa 2 Stunden vor dem Abflugzeitpunkt. Gepäck, das vor diesem Zeitpunkt vom Passagier aufgegeben wurde, muss daher innerhalb des Gepäckhandhabungssystems zwischengelagert werden.

Hinzu kommt, dass zahlreiche Fluggesellschaften zunehmend ihren Passagieren die Möglichkeit anbieten, ihr Gepäck bereits am Vortag aufzugeben. Aus diesem Grund muss das Gepäckhandhabungssystem so ausgelegt sein, dass es eine Speicherung oder Zwischenlagerung des Gepäcks über mehrere Stunden bis zu einigen Tagen erlaubt. Insbesondere für größere Verkehrsflughäfen mit großem Passagieraufkommen bedeutet dies, dass eine ausreichende Speicherkapazität für bis zu mehrere Tausend Gepäckstücke im Gepäckhandhabungssystem vorgehalten werden muss.

Hierzu ist beispielsweise allgemein bekannt, das Aufbewahren des Frühgepäcks in Förderwagen vorzusehen. Hierbei wird das Frühgepäck manuell aus dem Gepäckhandhabungssystem vorzusehen. Hierbei wird das Frühgepäck manuell aus dem Gepäckhandhabungssystem entnommen und in einem Aufbewahrungsbereich auf Förderwagen platziert. Nachteilig an dieser Lösung ist, dass einerseits ein nicht unbeträchtlicher Flächenbedarf resultiert und dass andererseits sowohl die Entnahme als auch die Wiedereinschleusung des Frühgepäcks in das Gepäckhandhabungssystem manuell und damit sehr arbeits- und kostenintensiv durchzuführen ist.

Eine andere Art der Aufbewahrung ist die Zwischenlagerung des Gepäcks auf Förderbändern, die speziell für die Zwischenlagerung des Frühgepäcks eingerichtet werden. Eine solche Ausführung ist beispielhaft in der EP 0742163 beschrieben. Hierbei wird das Gepäck aus dem üblichen Förderweg des Gepäcks herausgeführt und auf einem als Endlosschleife ausgebildeten Förderband solange zwischengelagert, bis das betreffende Gepäckstück verladen werden kann.

Selbst wenn in einer solchen Anordnung auf einem Teil des Fördersystems mehrere Gepäckstücke gelagert werden können, ist deutlich erkennbar, dass bei mehreren Hundert bis mehreren Tausend Gepäckstücken der Bedarf an fördertechnischen Einrichtungen gewaltig ist, wobei hierfür auch eine entsprechend große Fläche zur Verfügung zu stellen ist.

Ausgehend von diesem Stand der Technik ist es Aufgabe der Erfindung, ein Verfahren und eine Vorrichtung der Eingangs genannten Art aufzuzeigen, bei welchen einerseits die funktionellen Vorteile einer automatisierten Frühgepäckspeicherung berücksichtigt sind und andererseits die Frühgepäckspeicherung mit einem deutlich reduzierten Flächenbedarf realisiert ist.

Erfindungsgemäß wird diese Aufgabe durch die kennzeichnenden Merkmale der Patentansprüche 1 und 7 gelöst.

Dementsprechend ist das erfindungsgemäße Verfahren dadurch gekennzeichnet, dass das Frühgepäck vom Aufgabeort über eine Förderstrecke des Fördersystems zu einem für die Zwischenlagerung von Frühgepäck vorgesehenen Bereich gefördert und dort jeweils einzeln mechanisch gehandhabt und raumsparend auf zugewiesenen Zwischenlagerorten gestapelt wird, dass der betreffende Zwischenlagerort und das jeweilige Gepäck EDV-mäßig erfasst werden, und dass bei Erreichen eines vorgebbaren Zeitpunktes die an dem betreffenden Zwischehlagerort gespeicherten Frühgepäckstücke mechanisch aus dem Lagerort entnommen und über die Förderstrecke dem normalen Verladeprozess zugeführt werden.

Als wesentliches Element der Erfindung ist hervorzuheben, dass die frühzeitig aufgegebenen Gepäckstücke automatisiert auf Zwischenlagerplätze aufgestapelt werden, wobei diese Zwischenlagerplätze so ausgestaltet sind, dass sie automatisiert entleert werden können und die Gepäckstücke somit ohne manuelle Eingriffe wieder in den üblichen Ablauf der Gepäckhandhabung eingeführt werden können. Hierbei wird mit der Erfindung eine Lösung aufgezeigt, die eine hohe Gepäckkonzentration in dem für die Zwischenlagerung verfügbaren Raum ermöglicht und die eine schnelle Wiedereinschleusung des Gepäcks für die weitere Verarbeitung zulässt. Die Erfindung ist insbesondere dadurch ausgezeichnet, dass ein deutlich verbessertes Verhältnis zwischen benötigter Fläche und darauf speicherbarer Gepäckmenge erreicht wird.

Gemäß einer vorteilhaften Weiterbildung des erfindungsgemäßen Verfahrens ist vorgesehen, dass das Frühgepäck zunächst über die zur üblichen Verladung des Gepäcks vorgesehene Förderstrecke zu einer Ausleitstelle gefördert wird, von wo es zu dem Zwischenlagerort für Frühgepäck gefördert wird, und dass bei Erreichen des vorgegebenen Zeitpunktes das betreffende Gepäck identifiziert, mittels mechanischer Mittel aus dem Zwischenlagerort entnommen und in die Förderstrecke für den normalen Beladevorgang wieder eingeschleust wird.

Gemäß einer weiteren Ausgestaltung der Erfindung wird den Zwischenlagerorten EDV-mäßig ein Flugziel, eine Flugklasse und/oder ein Abfertigungszeitraum zugewiesen und das Frühgepäck entsprechend der zugewiesenen Kriterien sortiert und mittels einer Leitvorrichtung zum vorgesehenen Zwischenlagerort transportiert und mechanisch in den Zwischenlagerort eingelagert.

Hierbei kann es vorteilhaft sein, dass nach der Ausleitung des Frühgepäcks aus der normalen Förderstrecke mehrere Förderstrecken eingerichtet werden, um die Frühgepäckstücke, z.B. sortiert nach Flugziel oder Abfertigungszeit, an ihren Zwischenlagerplatz zu befördern.

Das zu speichernde Frühgepäck wird demnach über eine Förderstrecke aus dem üblichen Gepäckhandhabungssystem ausgeschleust. Die Förderstrecke verfügt hierbei über einen oder mehrere Ein- und Ausgänge, welche die Verbindung zum restlichen Gepäckhandhabungssystem bilden. Innerhalb des derart separaten Frühgepäckspeicherbereichs kann vorgesehen sein, dass sich die Förderstrecke in mehrere Bahnen verzweigt, so dass die Gepäckstücke nach dem jeweiligen Flugziel oder nach dem vorgesehenen Abfertigungszeitraum oder entsprechend dem jeweiligen Terminal beziehungsweise Ausgang in unterschiedliche Bereiche des Frühgepäckspeichers geleitet werden.

Die Förderstrecke verfügt hierbei über mehrere Ausschleuspunkte, an denen die Gepäckstücke vorbeigeführt werden. Sobald ein Gepäckstück den ihm zugeordneten Speicherbereich erreicht hat, wird es aus der Förderstrecke ausgeschleust. Dies erfolgt nach bekannten Verfahren entsprechend der Ausgestaltung der Förderstrecke. Bei Bandförderern erfolgt die Ausschleusung zum Beispiel durch Schieber oder Weichen, bei Schalenförderern zum Beispiel durch ein Kippen der Behälterschale.

Nach der Ausschleusung erfolgt über ein automatisiertes Verladeverfahren, wie es zum Beispiel in der De 199 34 095 beschrieben wurde, eine Einlagerung und Aufstapelung aller Gepäckstücke, die diesem Bereich des Frühgepäckspeichers zugeordnet wurden.

Sobald der Zeitpunkt für die weitere Abwicklung des Gepäcks (Verladung in Container oder auf Gepäckwagen für den Transport zum Flugzeug) erreicht ist, wird das auf dem Zwischenlagerplatz gespeicherte Gepäck automatisiert auf die Förderstrecke zurück verladen und über die fördertechnische Verbindung wieder in das Gepäckhandhabungssystem zurückgeführt. Die automatisierte Entladung erfolgt hierbei mit Vorrichtung wie sie beispielsweise in der DE 100 15 778 beschrieben wurden.

Grundsätzlich ist gemäß der Erfindung auch vorgesehen, die insbesondere in Flugzeugen zum Einsatz gelangenden Gepäckcontainer bereits mit dem angelieferten Frühgepäck vorab zu beladen und die derart für die Verladung in das jeweilige Flugzeug vorbereiteten Gepäckcontainer samt dem darin enthaltenen Frühgepäck zwischenzulagern, so dass der ansonsten später vorgesehene Beladevorgang bereits während der Zwischenlagerung durchgeführt werden kann. Dies setzt lediglich voraus, dass im Zeitpunkt der "Vorbeladung" der Gepäckcontainer eine ausreichende Menge an Frühgepäck zur Verfügung steht.

Hierbei sieht das erfindungsgemäße Verfahren auch vor, sofern das Frühgepäck im Zwischenlagerort für einen bestimmten Flug vorsortiert ist, verkehrsarme Zeiten bis zum tatsächlichen planmäßigen Abflugszeitpunkt zu nutzen, um die Vorbeladung der Container und deren anschließende Zwischenlagerung vorzunehmen.

Generell ist das erfindungsgemäße Verfahren in weiterer Verbesserung dadurch gekennzeichnet, dass die Überwachung und Steuerung der zur Durchführung des Verfahrens vorgesehenen Einrichtung mittels EDV erfolgt.

Eine Vorrichtung zur Durchführung des vorstehend beschriebenen Verfahrens besitzt ein an sich bekanntes Fördersystem zur mechanischen Beförderung von Gepäckstücken, das mit wenigstens einer zur üblichen Beförderung von Gepäck vorgesehenen ersten Förderstrecke versehen ist soweit mit wenigstens je einem der ersten Förderstrecke zugeordneten Aufgabeort und Entnahmeort für Gepäck, insbesondere für Frühgepäck, wobei das Frühgepäck an einem Zwischenlagerort verwahrt ist. Eine derartige Vorrichtung ist insbesondere bekannt aus der EP 07 42 163. Die darin beschriebene Vorrichtung zur Zwischenlagerung von Frühgepäck besteht aus einem in Form einer mäanderförmigen Endlosschleife gestalteten Förderband, welches über diskrete Zuund Abführstellen mit dem Hauptfördersystem verbunden ist. Wenn also Frühgepäck angeliefert wird, so wird es auf dem mäanderförmigen Endlos-Förderband abgelegt und bleibt darauf, bis es wieder zur Verladung in das betreffende Verkehrsmittel, nämlich in das jeweilige Flugzeug, benötigt wird. Zwangsläufig ist diese Art der Zwischenlagerung mit einem erheblichen Aufwand an technischen Einrichtungen für das Gepäckhandhabungssystem sowie mit einem gewaltigen Flächenbedarf verbunden, wobei der Zeitbedarf für das Ein- beziehungsweise für das Auslagern des Frühgepäcks noch nicht einmal berücksichtigt ist.

Hiervon ausgehend ist es Aufgabe der Erfindung eine Vorrichtung zur Zwischenlagerung der vorgenannten Art zu schaffen, welche mit möglichst geringem Platzbedarf auskommt, das heißt, dass auf der verfügbaren Fläche eine signifikante größere Gepäckmenge untergebracht werden kann im Vergleich zu der bekannten Lösung, wobei der zur Ein- beziehungsweise zur Auslagerung erforderliche Zeitbedarf möglichst geringer sein soll.

Diese Aufgabe wird erfindungsgemäß entsprechend Anspruch 7 dadurch gelöst, dass die zur üblichen Verladung des Gepäcks vorgesehene Förderstrecke mit wenigstens einer Aus- und Einleitstelle versehen ist, welche jeweils eine Leitvorrichtung aufweist, die das Frühgepäck aus dieser Förderstrecke jeweils zu dem vorgesehenen Zwischenlagerort ausleitet beziehungsweise vom vorgesehenen Zwischenlagerort zu bestimmungsgemäßen Verladung in die zur üblichen Verladung des Gepäcks vorgesehene Förderstrecke einleitet, und dass an jedem Zwischenlagerort mechanische Mittel zur Handhabung jedes einzelnen Gepäckstücks vorgesehen sind, welche das betreffende Gepäckstück ergreifen und von der Förderstrecke in den vorgesehenen Zwischenlagerort für Frühgepäck befördern beziehungsweise welche das Frühgepäck aus dem vorgesehenen Zwischenlagerungsort für Frühgepäck entnehmen und zur Förderstrecke befördern.

In vorteilhafter Weiterbildung der Erfindung kann vorgesehen sein, dass die zur Handhabung des Frühgepäcks an jedem Zwischenlagerort für Frühgepäck vorgesehenen mechanischen Mittel jeweils als Roboter ausgebildet sind, welche das Frühgepäck jeweils in ortsfesten Stapeln anordnen, wobei die an jedem Zwischenlagerort eingesetzten mechanischen Mittel vorzugsweise mehrachsige Roboter sind.

Gemäß einer weiteren bevorzugten Ausgestaltung der erfindungsgemäßen Vorrichtung sind wenigstens zwei Zwischenlagerorte vorgesehen, an welchen das Gepäck jeweils in ortsfesten Stapeln gestapelt ist. Das bedeutet, dass anders als im Stand der Technik die zwischengelagerten Gepäckstücke an einem räumlich definierten Ort verbleiben, welchem sie erfindungsgemäß mittels Einsatz mechanischer Fördermittel, wie Roboter und Förderband oder so genannter DCV (Destination Coded Vehicles), zugeführt und später wieder entnommen werden. Durch das planmäßige Stapeln des Frühgepäcks hinsichtlich Zielort und/oder frühestem Verladezeitpunkt in Abhängigkeit des vorgesehenen Startzeitpunkts ist eine sehr rasche Zuführung des Frühgepäcks aus der Zwischenlagerung in das Hauptfördersystem und damit zur Verladung gewährleistet.

Entsprechend einer bevorzugten Ausgestaltung der erfindungsgemäßen Vorrichtung ist auf der Förderstrecke jedem Zwischenlagerort eine weichenartige Leitvorrichtung zugeordnet, wobei diese abhängig von ihrer jeweiligen Stellung das ankommenden Gepäck auf der Förderstrecke weiterleitet oder zu dem vorgesehenen Zwischenlagerort herausleitet.

Grundsätzlich können gemäß der Erfindung die Aus- und Einleitstelle aus dem herkömmlichen Gepäckfördersystem ortseinheitlich oder ortsverschieden ausgeführt sein. Gemäß der ersten Variante dient die Aus- und Einleitstelle sowohl zu Ausleiten des Frühgepäcks aus der üblichen Förderstrecke zum Zwischenlagerort als auch zum Einleiten des Frühgepäcks aus dem Zwischenlagerort in die übliche Förderstrecke zum Entnahmeort. Die zweite Variante sieht vor, dass die Einlieferung von Frühgepäck in den Zwischenlagerort einerseits und die Auslieferung des Frühgepäcks aus dem Zwischenlagerort in das übliche Fördersystem räumlich voneinander getrennt erfolgen.

Gemäß einer bevorzugten Ausgestaltung der Erfindung erweist es sich als vorteilhaft, dass nach jeder Ein- und Ausleitstelle ein verzweigtes Fördersystem vorgesehen ist, über das die Frühgepäckstücke zu den jeweilig vorgesehenen Zwischenlagerorten hin transportiert werden bzw. nach Erreichen des Abfertigungszeitpunktes zur Ausleitstelle transportiert werden, um sicher zu stellen, dass entsprechend der zu befördernden Gepäckmenge eine ausreichende Förderkapazität vorhanden ist.

Ferner ist die erfindungsgemäße Vorrichtung durch eine Zentraleinheit einer EDV-Anlage gekennzeichnet, welche zur Steuerung und Überwachung des Betriebsablaufs des Fördersystems einschließlich seiner Einzelkomponenten dient, wobei bevorzugterweise alle eingesetzten Fördermittel und Leitvorrichtungen mit der Zentraleinheit der EDV-Anlage verbunden sind, welche deren Betätigung veranlasst und kontrolliert.

Gemäß einer weiteren vorteilhafte Ausgestaltung der erfindungsgemäßen Vorrichtung sind alle Zwischenlagerorte mit Lagerprtüberwachungsmodulen ausgerüstet, welche den Füllgrad und den Beladungszustand der Zwischenlagerorte mit Frühgepäck erfassen und zur Anzeige bringen, um so die am jeweiligen Zwischenlagerort verfügbare Lagerkapazität umfassend auszunutzen.

Dabei erweist es sich als besonders günstig, dass jedes Lagerortüberwachungsmodul mit der Zentraleinheit der EDV-Anlage verbunden ist und dass diese abhängig vom jeweiligen Füllgrad und Beladungszustand der Zwischenlagerorte die Zulieferung von Frühgepäck an den jeweiligen Zwischenlagerort steuert.

Diese und weitere vorteilhafte Ausgestaltungen der Erfindung sind Gegenstand der Patentansprüche.

Anhand eines in der beigefügten Zeichnung dargestellten Ausführungsbeispieles der Erfindung sollen vorteilhafte Ausgestaltungen, Verbesserungen sowie Vorteile der Erfindung näher erläutert und beschrieben werden. Hierbei soll auch das Grundprinzip der vorliegenden Erfindung nochmals erläutert und anhand des Ausführungsbeispiels im Einzelnen beschrieben werden.

Es zeigen
- Fig. 1: eine schematisierte Darstellung eines erfindungsgemäßen Zwischenlagerungssystems für Frühgepäck und
- Fig. 2: ein Übersichtsschema für die computergestützte Steuerung und Überwachung der für die Handhabung des eingesetzten Zwischenablagerungssystem für Frühgepäck vorgesehenen Komponenten.

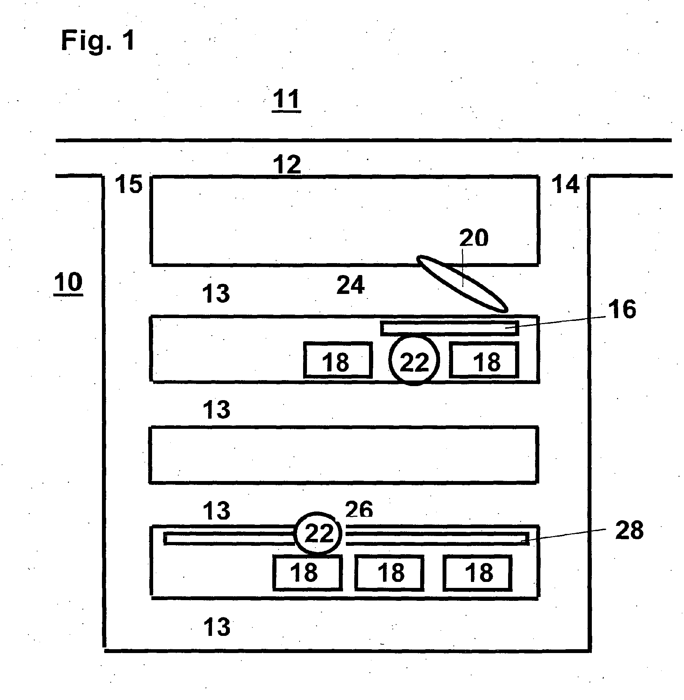

Fig. 1 zeigt eine schematisierte Darstellung eines erfindungsgemäßen Zwischenlagerungssystems 10 für Frühgepäck, welches mit dem Gepäckhandhabungssystem 11 des Verkehrsflughafens zusammenarbeitet. Hierbei stellt die Förderstrecke 12 einen Teil des Gepäckhandhabungssystems 11 dar, die Gepäck von einem Aufgabeort zu einem Entnahmeort, welche beide hier nicht dargestellt sind, befördert. In dem Anwendungsbeispiel sind die Förderstrecken als Bandförderer ausgebildet, wobei aber ohne Einschränkungen auch andere Technologien wie Schalenförderer oder Destination Coded Vehicles (DCVs), etc. eingesetzt werden können.

Die Einspeisung der Frühgepäckstücke aus der Förderstrecke 12 in das erfindungsgemäße Führgepäck-Verwahrungssystem 10 erfolgt über eine oder mehrere Einleitstellen 15. Für die Rückführung der Gepäckstücke in die Gepäckförderanlage sind eine oder mehrere Ausleitstellen 14 vorgesehen. Im Anwendungsbeispiel sind hiervon jeweils nur eine Einleitstelle 15 und Ausleitstelle 14 dargestellt.

Innerhalb des Zwischenlagerungs- oder Frühgepäckspeichersystems 10 verzweigt sich das Fördersystem in mehrere Bahnen 13, die gemäß einer Ausführungsform parallel zueinander angeordnet sind. Neben den Bahnen 13 sind die Zwischenlagerplätze 18 des Speichersystems angeordnet.

Sobald ein Gepäckstück den ihm zugeordneten Zwischenlagerplatz 18 erreicht hat, wird es mittels einer Ausschleusungsvorrichtung 20, die zum Beispiel als Weiche oder Schieber ausgeführt sein kann, auf eine Abnahmestelle 16 transportiert. In der dargestellten Ausführungsform (Fig. 1) ist zur Ausleitung eine Weiche 20 vorgesehen, die in den Bereich der Förderstrecke 13 einschwenkt und hierdurch das Gepäckstück zum Verlassen der Förderstrecke 13 zwingt. Dort übernimmt ein mechanisches Fördermittel 22, zum Beispiel in Form eines mehrachsigen Roboters wie aus der DE 100 18 385 A1 beziehungsweise aus der DE 100 35 810 A1 bekannt, das angelieferte Gepäck ohne zusätzlichen manuellen Eingriff von der Abnahmestelle 16 und befördert es zu dessen vorbestimmtem Zwischenlagerplatz 18. In einer anderen Ausführungsform wird auf die Ausschleusung auf eine Abnahmestelle 16 verzichtet und die Ausschleusung erfolg direkt auf das mechanische Fördermittel 22.

Sofern die Gepäckstücke zunächst in hier nicht dargestellte Transportwannen geladen werden, auf denen die Beförderung zu den Zwischenlagerorten 18 erfolgt, werden die Transportwannen mittels entsprechender, hier nicht gezeigter Kippvorrichtung entleert und die Gepäckstücke ebenfalls vom Roboter 22, wie zuvor beschrieben, übernommen und an dem vorbestimmten Zwischenlagerplatz stapelweise abgelegt. Dabei erfolgt die automatisierte Entladung mit Vorrichtung wie sie zum Beispiel aus der DE 100 15 778 A1 bekannt ist.

In Fig. 1 sind zwei mögliche Ausführungsformen für die Anordnung der als Handhabungsvorrichtung eingesetzten Roboter 22 dargestellt. In einem ersten Bereich 24 ist der betreffende Roboter 22 stationär, das heißt ortsfest zwischen zwei Zwischenspeicherplätzen 18 aufgestellt. Hierbei lassen sich mit dieser Ausführungsform jeweils zwei Zwischenspeicherplätze 18 bedienen.

In einem zweiten Bereich 26 ist der Roboter 22 längsbeweglich auf einer Schiene 28 installiert. Bei dieser Ausführung können mit einem Roboter 22 nacheinander mehrere Zwischenspeicherplätze 18 bedient werden, indem der Roboter 22 auf der Schiene 28 zu dem jeweiligen Zwischenspeicherplatz 18 fährt und dort den Einlagerungsprozess ausführt.

Jeder Zwischenlagerplatz 18 ist so ausgeführt, dass eine größere Menge Gepäckstücke, beispielsweise 20 - 40 Gepäckstücke, mit Hilfe der Roboter 22 neben- und übereinander gestapelt werden können. In einer vorteilhaften Ausführung verfügt der Zwischenlagerplatz 18 hierzu über eine oder mehrere hier nicht gezeigte Seitenbegrenzungen, um die Gefahr des Herausrutschens von Gepäck aus dem Zwischenlagerplatz 18 zu vermeiden.

Durch diese Form der Aufstapelung und Einlagerung wird erreicht, dass eine wesentlich größere Menge an Gepäckstücken pro Flächeneinheit gespeichert werden kann als dies gemäß der EP 0 742 163 möglich ist.

Des Weiteren verfügt der Zwischenlagerplatz 18 über eine ebenfalls nicht näher dargestellte Überwachungsvorrichtung, welche die aktuelle Kontur des abgelegten Gepäcks vermisst. Diese Daten werden unter anderem zur Steuerung der Handhabungsvorrichtungen 22 verwendet, um eine sichere und schonende Gepäckablage zu ermöglichen sowie um sicherzustellen, dass die Zwischenlagerplätze 18 nicht überladen werden.

Sobald das zwischengelagerte Gepäck für die weitere Abfertigung aus dem Frühgepäckspeicher 10 abgerufen wird, wird das Gepäck vom Zwischenlagerplatz 17 auf die Förderstrecke 13 abgelegt und von dort über die Ausleitstelle 14 auf die Förderanlage 12 transportiert. Hierzu verfügt der Zwischenlagerplatz 18 in einer möglichen Ausgestaltung über eine Kippvorrichtung ähnlich der in der De 100 15 778 beschriebenen Ausführung, welche das aufgenommene Gepäck 18 auf die Förderstrecke 13 entleert. In diesem Fall erfolgt die Zu- und Abfuhr des Gepäcks zu und von den Zwischenlagerplätzen mit den selben Förderelementen 13.

In einer weiteren, hiervon verschiedenen Ausführung können die Zu- und Abfördersysteme auch getrennt voneinander ausgeführt sein. Diese zweite Ausführung hat einerseits den Vorteil, dass sich einzulagerndes und auszuschleusendes Gepäck nicht auf den Förderstreckend 13 begegnen kann, hat aber andererseits den Nachteil eines größeren Bedarfs an Fördertechnik.

Da der Einlagerung des Gepäcks zusätzlich Sortierkriterien wie Flugziel oder Abfertigungszeitraum zugrunde gelegt werden können, ist sichergestellt, dass die Gepäckstücke bei Freigabe für die weitere Abwicklung gezielt dem Zwischenlagerungssystem 10 entnommen werden können, ohne dass andere Gepäckstücke, die noch nicht freigegeben sind, bewegt werden müssen. Zudem können mit dieser Verfahrensweise Änderungen im Ablauf, zum Beispiel Änderungen der Abflugzeit, auf einfache Weise in dem Handhabungsprozess berücksichtigt werden, da hierbei jeweils nur der Zeitpunkt der Freigabe zur Ausleitung für einen bestimmten Zwischenlagerplatz 18 verwaltet werden muss und nicht die wesentlich höhere Zahl der dort abgelegten individuellen Gepäckstücke.

Für die steuerungstechnische Realisierung des erfindungsgemäßen Verfahrens ist weiterhin ein Frühgepäck-Management-System 30 mit Rechner ein wesentlicher Bestandteil der Vorrichtung. Dieser Rechner, der auch von mehreren Rechnersystemen realisiert sein kann, umfasst hierbei mehrere Funktionen:
Steuerung der einzelnen Subsysteme
Koordination der logistischen Abläufe zwischen den Subsystemen
Datenmanagement und Datenaustausch mit der Steuerung des Gepäckhandhabungssystems 11

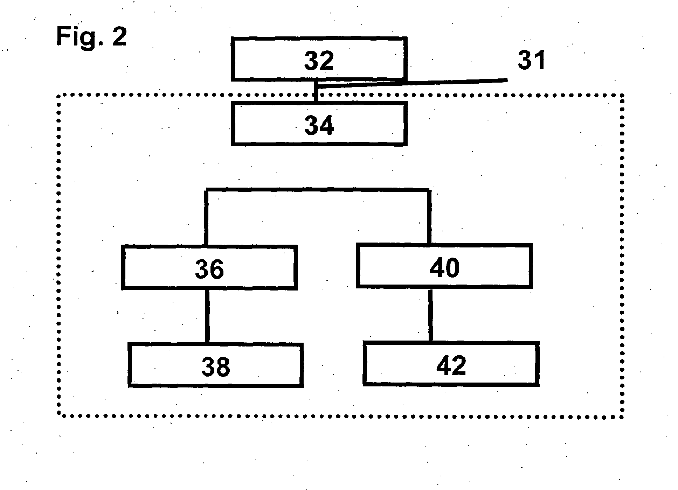

Eine bevorzugte Ausführung des Frühgepäck-Managementsystem 30 ist in Fig. 2 gezeigt, wobei im Sinne der Erfindung auch andere informationstechnische Ausführungen in Frage kommen. Die gezeigte Ausführung hat hierbei jedoch den Vorteil eines modularen Aufbaus, so dass Unterfunktionen einfach modifiziert und ausgetauscht werden können, ohne dass die Gesamtfunktionalität beeinträchtigt wird. Hierdurch ist auch eine einfachere Anbindung an bereits vorhandene Rechnersysteme am Flughafen bzw. innerhalb der betreffenden Gepäckanlage möglich.

Das Frühgepäck-Managementsystem 30 ist in der gezeigten Ausführung mit dem Datenverarbeitungssystem 32 des Gepäckhandhabungssystem 11 über eine Datenschnittstelle 31 verbunden. Über diese Datenschnittstelle 31 erhält das Frühgepäck-Managementsystem 30 die Information über zum Beispiel geplante und aktuelle Abfertigungszeiten für die anstehenden Flüge, über die im System befindlichen und im Frühgepäckspeicher 10 einzulagernden Gepäckstücke sowie gegebenenfalls weitere erforderliche Daten.

Als wesentliche Elemente enthält das Frühgepäck-Managementsystem 30 ein Lagerverwaltungsmodul 34, mittels welchem die zeitliche Belegung der einzelnen Zwischenlagerplätze 18 geplant und verwaltet wird, wobei die einzelnen Zwischenlagerplätze 18 während definierter Zeiträume bestimmten Flügen oder bestimmten Abfertigungszeiträumen zugeordnet werden.

Entsprechend der Belegungsplanung durch das Lagerverwaltungsmodul 34 wird der Transport der einzulagernden Gepäckstücke über ein Routing-Modul 36 gesteuert. Diese plant und überwacht die Bewegung der Gepäckstücke zu den Ausschleusungspunkten 20. Die eigentliche Steuerung der Fördertechnik wird hierbei zum Beispiel über eine SPS (speicherprogrammierbare Steuerung) 38 realisiert.

Die Lagerplatzüberwachungsmodule 40 sind an jedem Zwischenlagerplatz 18 installiert und überwachen den Füllgrad und Ladezustand der Lagerplätze 18. Diese Daten werden zum einen an das Lagerverwaltungsmodul 34 gemeldet, um dieses Modul über den aktuellen Stand des Füllgrades und damit der noch freien Beladungskapazität zu informieren. Zum anderen wird ein Steuermodul 42 zur Steuerung der Handhabungsvorrichtung 22 von den Daten beaufschlagt und somit die weitere Beladung gesteuert, indem zum Beispiel mit Hilfe dieser Steuerung 42 für die Handhabungsvorrichtung 22 die Abladeposition für das nächste Gepäckstück festgelegt wird.

### Bezugszeichenliste

- 10: Frühgepäck-Verwahrungssystem
- 11: Gepäckhandhabungssystem
- 12: Förderstrecke
- 13: Förderstrecken/Bahnen im Frühgepäck-Verwahrungssystem 10
- 14: Ausleitstelle
- 15: Einleitstelle
- 16: Abnahmestelle
- 18: Zwischenlagerplatz
- 20: Ausschleusungsvorrichtung, z. B. Weiche, Schieber
- 22: Handhabungsmittel, zum Beispiel Roboter
- 24: erster Bereich
- 26: zweiter Bereich
- 28: Schiene
- 30: Frühgepäck-Managementsystem
- 31: Schnittstelle
- 32: Datenverarbeitungssystem für 11
- 34: Lagerverwaltungsmodul
- 36: Routingmodul
- 40: Lagerplatzüberwachungsmodul
- 42: Steuerung der Handhabungsvorrichtungen 22

## Patentansprüche

1. Verfahren zur Verwahrung von frühzeitig angeliefertem Gepäck, sogenanntes Frühgepäck, in Verkehrseinrichtung, insbesondere Verkehrsflughäfen, welches Gepäck in zeitlichem Abstand von zum Beispiel > 2h vor der Startzeit des jeweiligen Verkehrsmittels an einem Aufgabeort angelieferte Gepäck bis zum Zeitpunkt der Verladung in das betreffende Verkehrsmittel in Verwahrung genommen wird, wobei das Gepäck in ein Fördersystem eingebracht und darin verwahrt wird, dass es jederzeit aus der Verwahrung entnommen werden kann und über eine Entnahmestation der Verladung zugeführt wird,
**dadurch gekennzeichnet, dass**
das Frühgepäck vom Aufgabeort über eine Förderstrecke des Fördersystems zu einem besonderen Zwischenlagerort gefördert und dort jeweils einzeln mechanisch gehandhabt und raumsparend auf zugewiesenen Zwischenlagerplätzen gestapelt wird, dass der betreffende Zwischenlagerort für das jeweilige Gepäck EDV-mäßig erfasst wird, und
dass bei Erreichen eines vorgebbaren Zeitpunktes die an dem Zwischenlagerort verwahrten Gepäckstücke mechanisch aus dem Lagerort entnommen und über die Förderstrecke dem normalen Verladeprozess zugeführt werden.

2. Verfahren nach Anspruch 1, **dadurch gekennzeichnet, dass** das Frühgepäck zunächst über die zur üblichen Verladung des Gepäcks vorgesehene Förderstrecke zu einer Einleitstelle gefördert wird, von wo es zu dem Zwischenlagerort für Frühgepäck gefördert wird, und dass bei Erreichen des vorgegebenen Zeitpunktes die an dem Zwischenlagerort verwahrten Gepäckstücke mittels mechanischer Mittel aus dem Zwischenlagerort entnommen und in die Förderstrecke für den normalen Beladevorgang eingeschleust werden.

3. Verfahren nach Anspruch 1 oder 2, **dadurch gekennzeichnet, dass** das Frühgepäck an dem Zwischenlagerort nach Flugziel und/oder nach Abfertigungszeitraum sortiert eingelagert wird.

4. Verfahren nach einem der Ansprüche 1 bis 3, **dadurch gekennzeichnet, dass** das Gepäck aus der normalen Förderstrecke zunächst auf eine auf den späteren Zielort bezogene zweite Förderstrecke ausgeleitet wird und dass von dieser zweiten Förderstrecke die Ausschleusung zum Zwischenlagerort für Frühgepäck erfolgt.

5. Verfahren nach einem der Ansprüche 1 bis 3, **dadurch gekennzeichnet, dass** das Gepäck von der normalen Förderstrecke zunächst auf eine auf den späteren Abfertigungszeitraum bezogene weitere Förderstrecke geleitet wird und dass hiervon die Ausschleusung zum Zwischenlagerort für Frühgepäck erfolgt.

6. Verfahren nach einem der Ansprüche 1 bis 5, **dadurch gekennzeichnet, dass** die Überwachung und Steuerung der zur Durchführung des Verfahrens vorgesehenen Einrichtung mittels EDV erfolgt.

7. Vorrichtung zur Durchführung des Verfahrens nach einem der vorherigen Ansprüche mit einem Fördersystem mit wenigstens einer zur üblichen Verladung von Gepäck vorgesehenen ersten Förderstrecke sowie mit wenigstens je einem der ersten Förderstrecke zugeordneten Aufgabeort und Entnahmeort für Gepäck, insbesondere für Frühgepäck, welches Frühgepäck an einem Zwischenlagerort verwahrt ist,
**dadurch gekennzeichnet, dass**
die zur üblichen Verladung des Gepäcks vorgesehene Förderstrecke mit wenigstens einer Aus- und Einleitstelle versehen ist, welche jeweils eine Leitvorrichtung aufweist, die das Frühgepäck aus dieser Förderstrecke jeweils zu dem vorgesehenen Zwischenlagerort ausleitet beziehungsweise vom vorgesehenen Zwischenlagerort zur bestimmungsgemäßen Verladung in die zur üblichen Verladung des Gepäcks vorgesehene Förderstrecke einleitet, und dass an jedem Zwischenlagerort mechanische Mittel zur Handhabung jedes einzelnen Gepäckstücks vorgesehen sind, welche das betreffende Gepäckstück ergreifen und von der Förderstrecke in den vorgesehenen Zwischenlagerort für Frühgepäck transportiert beziehungsweise die eingelagerten Gepäckstücke aus dem vorgesehenen Zwischenlagerort für Frühgepäck zur Förderstrecke befördern.

8. Vorrichtung nach Anspruch 7, **dadurch gekennzeichnet, dass** die zur Handhabung des Frühgepäcks an jedem Zwischenlagerort für Frühgepäck vorgesehenen mechanischen Mittel jeweils als Roboter ausgebildet sind, welche das Frühgepäck jeweils in ortsfesten Stapeln anordnen.

9. Vorrichtung nach Anspruch 7 oder 8, **dadurch gekennzeichnet, dass** die an jedem Zwischenlagerort eingesetzten mechanischen Mittel mehrachsige Roboter sind.

10. Vorrichtung nach Anspruch 7, **dadurch gekennzeichnet, dass** die Zwischenlagerorte mit einer Kippvorrichtung zum Entfernen der Gepäckstücke aus dem Zwischenlagerort auf die Förderstrecke versehen sind.

11. Vorrichtung nach einem der Ansprüche 7 bis 9, **dadurch gekennzeichnet, dass** wenigstens zwei Zwischenlagerorte vorgesehen sind, an welche das Gepäck jeweils in ortsfesten Stapeln gestapelt ist.

12. Vorrichtung nach einem der Ansprüche 7 bis 10, **dadurch gekennzeichnet, dass** die einer jeden Ein- und Ausleitstelle zugeordnete Leitvorrichtung weichenartig ausgebildet ist und abhängig von ihrer jeweiligen Stellung das ankommende Gepäck auf der Förderstrecke weiterleitet oder zu dem Zwischenlagerort herausleitet.

13. Vorrichtung nach einem der Ansprüche 7 bis 12, **dadurch gekennzeichnet, dass** zwischen jeder Ein- und Ausleitstelle einerseits und jedem Zwischenlagerort andererseits eine zweite Förderstrecke vorgesehen ist, über welche das Frühgepäck zu einem räumlich von der zur üblichen Verladung des Gepäcks vorgesehenen Förderstrecke entfernt angeordneten Zwischenlagerort gelangt.

14. Vorrichtung nach Anspruch 13, **dadurch gekennzeichnet, dass** die zweite Förderstrecke ihrerseits wenigstens eine Aus- und Einleitstelle aufweist, die mit einer Leitvorrichtung versehen ist, über welche das Frühgepäck den Zwischenlagerort erreicht.

15. Vorrichtung nach einem der Ansprüche 7 bis 14, **dadurch gekennzeichnet, dass** eine Zentraleinheit einer EDV-Anlage vorgesehen ist, welche zur Steuerung und Überwachung des Betriebsablaufs des Fördersystems einschließlich seiner Einzelkomponenten dient.

16. Vorrichtung nach einem der Ansprüche 7 bis 15, **dadurch gekennzeichnet, dass** alle eingesetzten Fördermittel und Leitvorrichtungen mit der Zentraleinheit der EDV-Anlage verbunden sind, welche deren Betätigung veranlasst und kontrolliert.

17. Vorrichtung nach einem der Ansprüche 7 bis 16, **dadurch gekennzeichnet, dass** alle Zwischenlagerorte mit Lagerortüberwachungsmodulen ausgerüstet sind, welche den Füllgrad und den Beladungszustand der Zwischenlagerorte mit Frühgepäck erfassen und zur Anzeige bringen, um so die am jeweiligen Zwischenlagerort verfügbare Lagerkapazität umfassend auszunutzen.

18. Vorrichtung nach einem der Ansprüche 7 bis 17, **dadurch gekennzeichnet, dass** jedes Lagerortüberwachungsmodul mit der Zentraleinheit der EDV-Anlage verbunden ist und dass diese abhängig vom jeweiligen Füllgrand und Beladungszustand der Zwischenlagerorte die Zulieferung von Frühgepäck an den jeweiligen Zwischenlagerort steuert.

19. Vorrichtung nach einem der Ansprüche 7 bis 14, **dadurch gekennzeichnet, dass** die den Zwischenlagerorten zugeordneten Ausleitstellen räumlich getrennt von den zugeordneten Einleitstellen angeordnet sind.

20. Vorrichtung nach einem der Ansprüche 7 bis 14, **dadurch gekennzeichnet, dass** Transportwannen zum Transport des angelieferten Frühgepäcks vorgesehen sind, in welchen das Frühgepäck vom jeweiligen Aufgabeort zu den zugewiesenen Zwischenlagerorten gelangt.

21. Vorrichtung nach einem der Ansprüche 7 bis 14, **dadurch gekennzeichnet, dass** Gepäckcontainer, die an die Laderaumkontur von bestimmten Verkehrsmitteln, insbesondere von Flugzeugen, angepasst sind und zur Aufnahme und zum Transport von Frühgepäck dienen zur Beladung an den Zwischenlagerorten eingesetzt werden.

22. Vorrichtung nach Anspruch 21, **dadurch gekennzeichnet, dass** die Gepäckcontainer mit am jeweiligen Aufgabeort angeliefertem Frühgepäck vorbeladen sind, wobei das angelieferte Frühgepäck in den Gepäckcontainern vom jeweiligen Aufgabeort zu den zugewiesenen Zwischenlagerorten gelangt und die Gepäckcontainer zur Zwischenlagerung des Frühgepäcks an den jeweiligen Zwischenlagerorten dienen.
